# EUROPÄISCHE PATENTSCHRIFT

(11) **EP 1 657 281 B1**
(45) Veröffentlichungstag und Bekanntmachung des Hinweises auf die Patenterteilung: **16.01.2008**
(21) Anmeldenummer: 05023623.1
(22) Anmeldetag: 28.10.2005
(51) Int. Cl.: C08L 69/00, C08L 59/04, G11B 7/24

(54) **Polycarbonat/Polyformal-Blend als Material für optische Datenspeicher mit verminderter Wasseraufnahme**
Polycarbonate/polyformal blend as material for optical data stores with reduced water uptake
Mélange de polycarbonate et de polyformal servant de matière pour mémoires de données optiques à absorption d'eau réduite

(30) Priorität: 11.11.2004 DE 102004054498
(43) Veröffentlichungstag der Anmeldung: 17.05.2006
(73) Patentinhaber: Bayer MaterialScience AG, 51368 Leverkusen (DE)
(72) Erfinder: Heuer, Helmut-Werner, Dr., 47829 Krefeld (DE); Wehrmann, Rolf, Dr., 47800 Krefeld (DE)

(56) Entgegenhaltungen:
- WO-A-20/05012379
- WO-A-20/05012405
- US-A- 4 374 974

## Beschreibung

Die Anmeldung betrifft thermoplastische Formmassen enthaltend Polycarbonat und mindestens ein Polyformal als Blendpartner zur Absenkung der Wasseraufnahme des Polycarbonates sowie die Verwendung solcher Formmassen zur Herstellung von Formkörpern, insbesondere optischen Datenträgern, wie z.B. Compact Disks, Video Disks, Digital Versatile Disks und weitere ein- oder mehrfach beschreib- wie löschbare optische Datenträger, sowie die entsprechenden Formkörper selbst.

Polycarbonate werden generell wegen ihrer besonderen Eigenschaftskombination wie Transparenz, Wärmeformbeständigkeit und Dimensionsstabilität als Materialien für den Spritzguss bzw. das Spritzprägen von optischen Datenträgern eingesetzt. Zur Verbesserung der Verarbeitbarkeit, die im allgemeinen bei Temperaturen im Bereich von 300°C bis 400 °C stattfindet, werden dem Polycarbonat in der Regel Additive, wie Entformungsmittel und Stabilisatoren zugesetzt.

Aromatische Polycarbonate auf Basis von Bisphenol A werden insbesondere für die Herstellung von optischen Datenträgern verwendet. Sie können jedoch bis zu 0,34 Gew. % Wasser aufnehmen, was sich ungünstig auf die Dimensionsstabilität der Datenträger auswirken kann. Eine verbesserte Dimensionsstabilität ist jedoch besonders beim Einsatz von blauen bzw. blau-grünen Lasern von Bedeutung.

In US B 6,391,418 werden Substrate für Datenträgermedien beschrieben, welche ein Biphenylderivat als Additiv zur Erhöhung der Dimensionsstabilität (geringerer Schrumpf) enthalten.

In M. Ueda, Mitsubishi Engineering Plastics Corp., Technical Digest of Joint ISOM / ODS 2002 Waikoloa Hawaii, 8. 7. 2002, Page 33 - 35, wird die Zugabe von kleinen Mengen an m-Terphenyl zu Bisphenol A Polycarbonat beschrieben, was zu einer Reduzierung der Wasseraufnahme führt. Der Nachteil dieser Biphenylderivate besteht jedoch darin, dass sie hoch-konjugierte aromatische π-Systeme darstellen, die bereits im blauen bzw. blau-grünen Spektralbereich absorbieren. Dies ist unerwünscht bei Speichertechnologien, welche in diesem Wellenlängenbereich arbeiten. Außerdem stellen Terphenyle relativ starre Moleküle dar, was sich negativ auf die mechanischen Eigenschaften in der Mischung mit Polycarbonat auswirkt.

Die im Stand der Technik beschriebenen Möglichkeiten führen also nicht zu in jeder Hinsicht befriedigenden Ergebnissen. Es ist im Stand der Technik aber auch keinerlei Andeutung zu finden, dass Polyformale als Blendpartner zur Absenkung der Wasseraufnahme geeignet sein könnten.

Es bestand daher die Aufgabe, thermoplastische Formmassen, enthaltend Polycarbonat mit einer verringerten Wasseraufnahme bereitzustellen, welche dadurch eine bessere Dimensionsstabilität aufweisen. Insbesondere erfordern die neuen Diskformate mit höherer Speicherkapazität und ggf. geringerer Diskdicke, wie z.B. die Digital Versatile Disks (DVDs), eine höhere Thermostabilität im Vergleich zur CD. Auftretende Materialschädigung bei der Verarbeitung zu Formkörpern und Belagsbildung im Werkzeug werden kritischer.

Mit den erfindungsgemäßen Formmassen wird diese Aufgabe überraschenderweise durch eine verbesserte Qualität der Datenspeicher und eine verbesserte Verarbeitbarkeit des Materials im Spritzguss bzw. Spritzprägeverfahren und eine reduzierte Wasseraufnahme und damit letztendlich eine verbesserte Dimensionsstabilität gelöst.

Gegenstand der vorliegenden Anmeldung sind daher thermoplastische Formmassen enthaltend mindestens ein Polycarbonat und mindestens ein Polyformal als Blendpartner zur Reduktion der Wasseraufnahme. Diese Polycarbonat/Polyformal-Blends führen somit zu einer verbesserten Dimensionsstabilität der Datenträger.

Die erfindungsgemäßen Polyformale als Blendpartner basieren auf der allgemeinen Formel (1) als wiederkehrende Monomereinheit 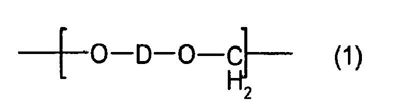 worin
- D: unabhängig voneinander für einen aromatischen Rest mit 6 bis 40, vorzugsweise 6 bis 35, insbesondere 6 bis 30 C-Atomen steht, der einen oder mehrere aromatische oder kondensierte, gegebenenfalls Heteroatome enthaltende aromatische Kerne enthalten kann und gegebenenfalls mit C₁-C₁₂-Alkyl, bevorzugt C₁-C₁₀-Alkyl, besonders bevorzugt C₁-C₈Alkyl und/oder Halogen, bevorzugt Fluor und Chlor, substituiert ist, und wobei der aromatische Rest weiterhin aliphatische Reste, cycloaliphatische Reste, aromatische Kerne oder Heteroatome als Brückenglieder enthalten kann.

Bevorzugt steht D in Formel (1) für einen Rest der Formel (1a) 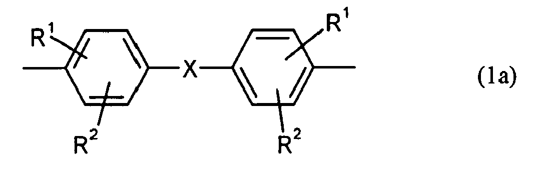 in der
- R¹ und R²: unabhängig voneinander für H, C₁-C₁₈-Alkyl-, C₁-C₁₈-Alkoxy, Halogen wie Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C₅ bis C₆-Cycloalkyliden, -O-, -SO-, -CO-, -S-, -SO₂-, oder ein für einen Rest der Formel (1b) 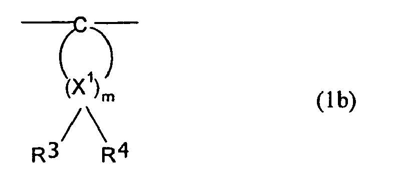 wobei
- R³ und R⁴: für jedes X¹ individuell wählbar, unabhängig voneinander Wasserstoff oder C₁ bis C₆₋Alkyl, vorzugsweise Wasserstoff, Methyl oder Ethyl bedeuten und
- X¹: Kohlenstoff und
- m: eine ganze Zahl von 4 bis 7, bevorzugt 4 oder 5 bedeuten, mit der Maßgabe, dass an mindestens einem Atom X¹, R³ und R⁴ gleichzeitig Alkyl sind.

Bevorzugt leitet sich D von folgenden Diphenolen ab: 4,4'-Dihydroxybiphenyl (DOD), 2,2-Bis-(4-hydroxyphenyl)-propan (Bisphenol A), 1,1-Bis-(4-hydroxyphenyl)-3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1, 1-Bis-(4-hydroxyphenyl)-1-phenylethan, 1,3-Bis-[2-(4-hydroxyphenyl)-2-propyl]benzol (Bisphenol M), 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugt leitet sich D von folgenden Diphenolen ab: 2,2-Bis-(4-hydroxyphenyl)-propan (Bisphenol A), 4,4'-Dihydroxybiphenyl (DOD), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Ganz besonders bevorzugt leitet sich D von 2,2-Bis-(4-hydroxyphenyl)-propan (Bisphenol A), 4,4'-Dihydroxybiphenyl (DOD), 1,3-Bis[2-(4-hydroxyphenyl)-2-propyl]-benzol (Bisphenol M) und 1,1-Bis-(4-hydroxyphenyl)-3,3,5-trimethylcyclohexan (Bisphenol TMC).

Ganz besonders bevorzugt steht D für einen Rest der Formel (1c) und/oder (1d) und/oder (1e)

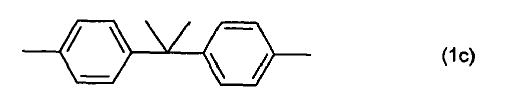

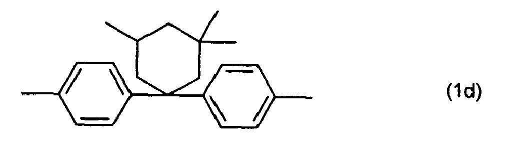

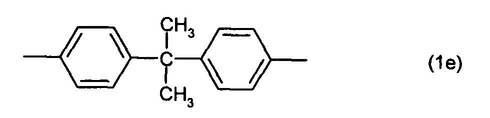

Speziell bevorzugt werden 2,2-Bis-(4-hydroxyphenyl)-propan (Bisphenol A) und 1,1-Bis-(4-hydroxyphenyl)-3,3,5-trimethylcyclohexan (Bisphenol TMC).

Die Diphenole können sowohl allein als auch im Gemisch miteinander verwendet werden: Unter Polyformalen im Sinne der vorliegenden Erfindung sind daher sowohl Homo- als auch Copolyformale sowie cyclische Homo- als auch Co-Oligoformale zu verstehen. Copolyformale enthalten im Allgemeinen mindestens bis zu 50 mol-%, vorzugsweise bis zu 45 mol-%, besonders bevorzugt bis zu 40 mol-%, insbesondere bis zu 30 mol-% (bezogen auf die Summe der Mole eingesetzter Diphenole) mindestens ein weiteres Diphenol, ausgewählt aus der Formel (1). Die Diphenole sind literaturbekannt oder nach literaturbekannten Verfahren herstellbar (siehe z.B. H.J. Busch et el., Ullmann's Encyclopedia of Inustrial Chemistry, VCH, New York 1991, 5. Ed., Vol. 19, p. 348).

Die erfindungsgemäßen Polyformale haben im Allgemeinen mittlere Molekulargewichte (Gewichtsmittel) von 600 bis 1.000.000 g/mol, vorzugsweise 600 bis 500.000 g/mol, besonders bevorzugt 1 000 bis 250.000 g/mol, insbesondere 10 000 bis 80 000 g/mol, bestimmt durch Gelpermeationschromatographie (GPC) kalibriert gegen Polycarbonat mit Bisphenol A als Diphenolbaustein.

Die Herstellung von Polyformalen wird in der noch nicht veröffentlichen DE 10 333 928 A beschrieben. Die Polyformale lassen sich herstellen, in dem Diphenole und Kettenabbrecher in einer homogenen Lösung aus Methylenchlorid oder alpha,alpha-Dichlortoluol und einem geeigneten hochsiedenden Lösungsmittel wie beispielsweise N-Methylpyrrolidon (NMP), Dimethylformamid (DMF), Dimethylsulfoxid (DMSO), N-Methylcaprolactam (NMC), Chlorbenzol, Dichlorbenzol, Trichlorbenzol oder Tetrahydrofuran (THF) in Gegenwart einer Base, bevorzugt Natriumhydroxid oder Kaliumhydroxid, bei Temperaturen zwischen 30 und 160°C zur Reaktion gebracht werden. Bevorzugte hochsiedende Lösungsmittel sind NMP, DMF, DMSO und NMC, besonders bevorzugt NMP, NMC, DMSO und ganz besonders bevorzugt NMP und NMC. Die Reaktionsführung kann auch mehrstufig erfolgen. Die gegebenenfalls notwendige Abtrennung der cyclischen Verunreinigungen erfolgt nach Neutralwäsche der organischen Phase durch einen Fällprozess in bzw. durch einen fraktionierten Knetprozess des Rohproduktes mit einem die cyclischen Verbindungen lösenden Lösungsmittel, z.B. Aceton. Die cyclischen Verunreinigungen lösen sich nahezu vollständig im Lösungsmittel und können durch portionsweises Kneten und Wechseln des Lösungsmittels fast vollständig abgetrennt werden. Durch Einsatz von beispielsweise ca. 10 Litern Aceton, welches in beispielsweise 5 Portionen zu einer Polyformalmenge von ca. 6 kg zugegeben wird kann ein Gehalt an Zyklen nach Kneten deutlich unter 1 % erreicht werden.

Cyclische Polyformale können auch durch einen Fällprozess in geeigneten Lösungsmitteln, die als Nichtlöser für das gewünschte Polymer und als Löser für die unerwünschten Zyklen fungieren, abgetrennt werden. Bevorzugt handelt es sich hierbei um Alkohole oder Ketone.

Bei dem zweiten Reaktanden handelt es sich beispielsweise um Methylenchlorid oder alpha,alpha-Dichlortoluol.

Die Reaktionstemperatur beträgt 30°C bis 160°C, bevorzugt 40°C bis 100°C besonders bevorzugt 50°C bis 80°C und ganz besonders bevorzugt 60°C bis 80°C.

Die erfindungsgemäßen Zusammensetzungen enthalten die Polyformale im allgemeinen zu einem Anteil von 0,1 bis 30 Gew.-%, bevorzugt 1 bis 30 Gew.-%, besonders bevorzugt 2 bis 30 Gew.-%, ganz besonders bevorzugt zwischen 5 und 30 Gew.-% bezogen auf die Zusammensetzung aus Polycarbonat und Polyformal.

Bevorzugt, besonders bevorzugt oder ganz besonders bevorzugt sind Ausführungsformen, welche von den unter bevorzugt, besonders bevorzugt oder ganz besonders bevorzugt genannten Parametern, Verbindungen, Definitionen und Erläuterungen Gebrauch machen.

Die in der Beschreibung aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Weiterhin sind Gegenstand der Erfindung die Verwendung solcher Formmassen zur Herstellung von optischen Datenträgern, wie z.B. Compact Disks, Video Disks, Digital Versatile Disks und weitere ein- oder mehrfach schreib- wie löschbare optische Datenträger, sowie die aus den Polymermischungen herstellbaren optischen Datenträger selbst.

Die erfindungsgemäße Zusammensetzung kann weiterhin auch für andere traditionelle Polycarbonat-Anwendungen, auch in solchen, die ein Polycarbonat mit einem höheren Molekulargewicht erfordern, benutzt werden. Die Anwendungen können transparent oder undurchsichtig sein wie zum Beispiele: Lebensmittel- und Getränkeverpackungen, optische Linsen und Prismen, Linsen für Beleuchtungszwecke, Autoscheinwerferlinsen, Verglasungen für Bau- und Kraftfahrzeuge, Verscheibungen anderer Art wie für Gewächshäuser, sogenannte Stegdoppelplatten oder Hohlkammerplatten. Andere Beispiele der Anwendungen sind Profile, Folien, Gehäuseteile jeder Art, z.B. für Medizinische Geräte, Haushaltsgeräte wie Saftpressen, Kaffeemaschinen, Mixer; für Büromaschinen wie Computer, Monitore, Drucker, Kopierer; für Platten, Rohre, Elektroinstallationskanäle, Fenster, Türen und Profile für den Bausektor, Innenausbau und Außenanwendungen; auf dem Gebiet der Elektrotechnik z.B. für Schalter und Stecker. Ferner können die erfindungsgemäßen Formkörper für Innenausbau- und Bauteile von Schienenfahrzeugen, Schiffen, Flugzeugen, Bussen und anderen Kraftfahrzeugen sowie für Kfz-Karosserieteile verwendet werden.

Thermoplastische Formmassen im Sinne der vorliegenden Erfindung enthalten überwiegend aromatische Polycarbonate. Unter Polycarbonate sind sowohl Homopolycarbonate als auch Copolycarbonate zu verstehen; die Polycarbonate können in bekannter Weise linear oder verzweigt sein. Sie weisen ein durch Gelpermeationschromatographie (kalibriert gegen Polycarbonat mit Bisphenol A als Diphenolbaustein) bestimmtes Gewichtsmittel des Molekulargewichts von 5.000 bis 80.000, vorzugsweise 10.000 bis 40.000 auf. Besonders bevorzugt liegt das Molekulargewicht zwischen 15000 und 35000, insbesondere 15000 und 22000.

Die Herstellung dieser Polycarbonate erfolgt in bekannter Weise aus Diphenolen, Kohlensäurederivaten, gegebenenfalls Kettenabbrechern und gegebenenfalls Verzweigern.

Die Herstellung von Polycarbonaten ist allgemein bekannt, z.B. Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Als Diphenolbaustein für die Polycarbonate kommen im Allgemeinen die oben als Formel (1) beschriebenen Diphenole in Frage.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,4-Bis-[2-(4-hydroxyphenyl)-2-propyl]benzol, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-3,3,5-trimethylcyclohexan und 1,3-Bis-[2-(4-hydroxyphenyl)-2-propyl]benzol.

Besonders bevorzugte Diphenole sind 2,2-Bis-(4-hydroxyphenyl)-propan (BPA), 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,3-Bis-[2-(4-hydroxyphenyl)-2-propyl]benzol (BPM), 1,1-Bis-(4-hydroxyphenyl)-cyclohexan und 1,1-Bis-(4-hydroxyphenyl)-3,3,5-trimethylcyclohexan (TMC).

Diese und weitere geeignete Diphenole sind z.B. in den US 3 028 635, 2 999 835, 3 148 172, 2991 273, 3 271 367, 4 982 014 und 2 999 846, in den DE-A 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den JP-A 62039/1986, 62040/1986 und 105550/1986 beschrieben.

Die Diphenole können sowohl allein als auch im Gemisch miteinander verwendet werden: Unter Polycarbonaten im Sinne der vorliegenden Erfindung sind daher sowohl Homo- als auch Copolycarbonate zu verstehen. Copolycarbonate enthalten im allgemeinen mindestens bis zu 50 mol-%, vorzugsweise bis zu 45 mol-%, besonders bevorzugt bis zu 40 mol-%, insbesondere bis zu 30 mol-% (bezogen auf die Summe der Mole eingesetzter Diphenole) mindestens ein weiteres Diphenol, ausgewählt aus der Formel 4 bzw. 5. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Besonders bevorzugt sind Polycarbonate, die Bisphenol A (BPA) und/oder Trimethylcyclohexylbisphenol (TMC) als Diphenolbausteine enthalten. Ganz besonders bevorzugt sind Homopolycarbonate aus BPA, oder Copolycarbonate aus BPA und TMC mit vorzugsweise 5 bis 60 Gew.-% TMC bezogen auf die Diphenole.

Geeignete Kohlensäurederivate sind beispielsweise Phosgen oder Diphenylcarbonat.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-isoOctylphenol, p-n-Nonylphenol und p-iso-Nonylphenol, p-Cumylphenol, Halogenphenole wie p-Chlorphenol, 2,4-Dichlorphenol, p-Bromphenol Amylphenol und 2,4,6-Tribromphenol sowie deren Mischungen.

Bevorzugte Kettenabbrecher sind die Phenole der Formel (I) 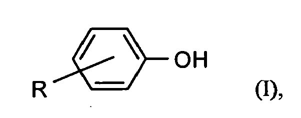 worin R Wasserstoff, tert.-Butyl oder ein verzweigter oder unverzweigter C₈- und/oder C₉-Alkylrest ist. Aber auch p-Cumylphenol kann bevorzugt verwendet werden. Im Falle des Umesterungsverfahrens resultiert der Kettenabbrecher aus dem eingesetzten Diarylcarbonat.

Die Menge an einzusetzendem Kettenabbrecher, bevorzugt im Phasengrenzflächenverfahren, beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und für einige Anwendungen sogar bevorzugt 3,3-Bis-(3-methyl-4-hydroxyphenyl)-2-oxo-2,3-dihydroindol.

Die Menge der gegebenenfalls einzusetzenden Verzweiger beträgt 0,01 Mol-% bis 2 Mol-%, bezogen wiederum auf Mole an jeweils eingesetzten Diphenolen.

Die Verzweiger können im Phasengrenzflächenverfahren entweder mit den Diphenolen und den Kettenabbrechern in der wässrig alkalischen Phase vorgelegt werden, oder in einem organischen Lösungsmittel gelöst zugegeben werden. Im Falle des Umesterungsverfahrens können die Verzweiger zusammen mit den Diphenolen eingesetzt werden.

Alle diese Maßnahmen zur Herstellung der thermoplastischen Polycarbonate sind dem Fachmann geläufig.

Den erfindungsgemäßen Zusammensetzungen können weiterhin für Polycarbonate übliche Zusätze in den bekannten Mengen enthalten, wie beispielhaft und vorzugsweise Stabilisatoren gegen UV-Strahlung, Flammschutzmittel, Farbstoffe, Füllstoffe, Schaummittel, optische Aufheller und Antistatika. Bei optischen Anwendungen werden bevorzugt solche Komponenten genommen, welche die Transparenz des Materials nicht negativ beeinflussen.

Diese Substanzen sind in vielen Veröffentlichungen zu finden wie etwa in Additives for Plastics Handbook, John Murphy, 1999 und im Handel erhältlich.
1. Geeignete Antioxidantien sind beispielsweise:
   1.1. Alkylierte Monophenole, zum Beispiel 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, Nonylphenole, die in der Seitenkette linear oder verzweigt sind, zum Beispiel, 2,6-Di-nonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol.
   1.2. Alkylthiomethylphenole, zum Beispiel 2,4-Dioctylthiomethyl-6-tert-butylphenol, 2,4-Dioctylthiomethyl-6-methylphenol, 2,4-Dioctylthiomethyl-6-ethylphenol, 2,6-Didodecylthiomethyl-4-nonylphenol.
   1.3. Hydrochinone und alkylierte Hydrochinone, zum Beispiel 2,6-Di-tert-butyl-4-methoxyphenol, 2,5-Di-tert-butylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
   1.4. Tocopherole, zum Beispiel α-Tocopherol, β-Tocopherol, γ-Tocopherol, δ-Tocopherol und Gemische davon (Vitamin E).
   1.5. Hydroxylierte Thiodiphenylether, zum Beispiel 2,2'-Thiobis(6-tert-butyl-4-methylphenol), 2,2'-Thiobis(4-octylphenol), 4,4'-Thiobis(6-tert-butyl-3-methyl-phenol), 4,4'-Thiobis(6-tert-butyl-2-methylphenol), 4,4'-Thiobis(3,6-di-sec-amylphe-nol), 4,4'-Bis(2,6-dimethyl-4-hydroxyphenyl)-disulfid.
   1.6. Alkylidenbisphenole, zum Beispiel 2,2'-Methylenbis(6-tert-butyl-4-methylphenol), 2,2'-Methylenbis(6-tert-butyl-4-ethylphenol), 2,2'-Methylenbis[4-methyl-6-(α-methylcyclohexyl)-phenol], 2,2'-Methylenbis(4-methyl-6-cyclohexylphenol), 2,2'-Methylenbis(6-nonyl-4-methylphenol), 2,2'-Methylenbis(4,6-di-tert-butyl-phenol), 2,2'-Ethylidenbis(4,6-di-tert-butylphenol), 2,2'-Ethylidenbis(6-tert-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-tert-butylphenol), 4,4'-Methylenbis(6-tert-butyl-2-methylphenol), 1,1-Bis(5-tert-butyl-4-hydroxy-2-methylphenyl)butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-Bis(5-tert-butyl-4-hydroxy-2-methylphenyl)-3-n-dodecylmercaptobutan, Ethylenglycolbis[3,3-bis(3'-tert-butyl-4'-hydroxyphenyl)butyrat], Bis(3-tert-butyl-4-hydroxy-5-methyl-phenyl)dicyclopentadien, Bis[2-(3'-tert-butyl-2'-hydroxy-5'-methylbenzyl)-6-tert-butyl-4-methylphenyl]terephthalat, 1,1-Bis(3,5-dimethyl-2-hydroxyphenyl)butan, 2,2-Bis(3,5-di-tert-butyl-4-hydroxyphenyl)propan, 2,2-Bis(5-tert-butyl-4-hydroxy-2-methylphenyl)-4-n-dodecylmercaptobutan, 1,1,5,5-Tetra-(5-tert-butyl-4-hydroxy-2-methylphenyl)pentan.
   1.7. O-, N- und S-Benzylverbindungen, zum Beispiel 3,5,3',5'-Tetra-tert-butyl-4,4'-dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)amin, Bis(4-tert-butyl-3-hydroxy-2,6-dimethylbenzyl)dithioterephthalat, Bis(3,5-di-tert-butyl-4-hydroxybenzyl)sulfid, Isooctyl-3,5-di-tert-butyl-4-hydroxybenzylmercaptoacetat.
   1.8. Hydroxybenzylierte Malonate, zum Beispiel Dioctadecyl-2,2-bis(3,5-di-tert-butyl-2-hydroxybenzyl)malonat, Dioctadecyl-2-(3-tert-butyl-4-hydroxy-5-methyl-benzyl)malonat, Didodecylmercaptoethyl-2,2-bis(3,5-di-tert-butyl-4-hydroxybenzyl) malonat, Bis[4-(1,1,3,3-tetramethylbutyl)-phenyl]-2,2-bis(3,5-di-tert-butyl-4-hydroxy-benzyl)malonat.
   1.9. Aromatische Hydronbenzylverbindungen, zum Beispiel 1,3,5-Tris-(3,5-di-tert-butyl-4-hydroxybenzyl)-2,4,6-trimethylbenzol, 1,4-Bis(3,5-di-tert-butyl-4-hydroxy-benzyl)-2,3,5,6-tetramethylbenzol, 2,4,6-Tris(3,5-di-tert-butyl-4-hydroxybenzyl)phenol.
   1.10. Triazinverbindungen, zum Beispiel 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxy-anilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris-(3,5-di-tert-butyl-4-hydroxybenzyl)isocyanurat, 1,3,5-Tris(4-tert-butyl-3-hydroxy-2,6-dimethylbenzyl)isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropioyl)hexahydro-1,3,5-triazin, 1,3,5-Tris(3,5-dicyclohexyl-4-hydroxybenzyl)isocyanurat.
   1.11. Acylaminophenole, zum Beispiel 4-Hydroxylauranilid, 4-Hydroxytearanilid, Octyl-N-(3,5-di-tert-butyl-4-hydroxyphenyl)carbamat.
   1.12. Ester von β-(3,5-Di-tert-butyl-4-hydroxyphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, ganz besonder geeignet und bevorzugt ist dabei der Ester mit Octadecanol (IRGANOX 1076 ® der Ciba Spec.)
   1.13. Ester von β-(5-tert-Butyl-4-hydroxy-3-methylphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
   1.14. Ester von β-(3,5-Dicyclohexyl-4-hydroxyphenyl)propionsäure mit ein- oder mehrwertigen Alkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl) isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabi-cyclo[2.2.2]octan.
   1.15. Ester von 3,5-Di-tert-butyl-4-hydroxyphenylessigsäure mit ein- oder mehrwertigen Alkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
   1.16. Amide of β-(3,5-Di-tert-butyl-4-hydroxyphenyl)propionsäure, z.B. N,N'-Bis(3,5-di-tert-butyl-4-hydroxyphenylpropionyl)hexamethylendiamid, N,N'-Bis(3,5-di-tert-butyl-4-hydroxyphenylpropionyl)trimethylendiamid, N,N'-Bis(3,5-di-tert-butyl-4-hydroxyphenylpropionyl)hydrazid, N,N'-Bis[2-(3-[3,5-di-tert-butyl-4-hydroxyphenyl]-propionyloxy)ethyl]oxamid (Naugard® XL-1 von Uniroyal).
   1.17. Ascorbinsäure (Vitamin C)
   1.18. Aminische Antioxidantien, zum Beispiel N,N'-Diisopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylen-diamin, N,N'-Bis(2-naphthyl)-p-phenylendiamin, N-Isopropyl-N'-phenyl-p-phenylen-diamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, zum Beispiel p,p'-Di-tert-octyl-diphenylamin, 4-n-Butylaminophenol, 4-Butyrylaminophenol, 4-Nonanoyl-aminophenol, 4-Dodecanoylaminophenol, 4-Octadecanoylaminophenol, Bis(4-methoxyphenyl)amin, 2,6-Di-tert-butyl-4-dimethylaminomethylphenol, 2,4'-Diaminodiphenylmethan, 4,4'-Diaminodiphenylmethan, N,N,N',N'-Tetramethyl-4,4'-diaminodiphenylmethan, 1,2-Bis[(2-methylphenyl)amino]ethan, 1,2-Bis(phenyl-amino)propan, (o-Tolyl)biguanid, Bis[4-(1',3'-dimethylbutyl)-phenyl]amin, tert-octyliertes N-Phenyl-1-naphthylamin, ein Gemisch von mono- und dialkylierten tert-Butyl/tert-Octyldiphenylaminen, ein Gemisch von mono- und dialkylierten Nonyldiphenylaminen, ein Gemisch von mono- und dialkylierten Dodecyldiphenylaminen, ein Gemisch von mono- und dialkylierten Isopropyl/Isohexyldiphenylaminen, ein Gemisch von mono- und dialkylierten tert-Butyldiphenylaminen, 2,3-Dihydro-3,3-dimethyl-4H-1,4-benzothiazin, Phenothiazin, ein Gemisch von mono- und dialkylierten tert-Butyl/tert-Octylphenothiazinen, ein Gemisch von mono- und dialkylierten tert-Octylphenothiazinen, N-Allylphenothiazin, N,N,N',N'-Tetraphenyl-1,4-diaminobut-2-en, N,N-bis(2,2,6,6-tetramethylpiperid-4-ylhexamethylendiamin, Bis(2,2,6,6-tetramethylpiperid-4-yl)sebacat, 2,2,6,6-Tetramethylpiperidin-4-on, 2,2,6,6-Tetra-methylpiperidin-4-ol. Es können einzelne dieser Verbindungen oder Gemische derselben eingesetzt werden.
   1.19 Geeignete Thiosynergisten sind zum Beispiel Dilaurylthiodipropionat und/oder Distearylthiodipropionat.
2. UV-Absorber und Lichtstabilisatoren können in den erfindungsgemäßen Zusammensetzungen in Mengen von 0,1 bis 15 Gew.-%, vorzugsweise 3 bis 8 Gew.-%, bezogen auf die Masse der Zusammensetzung, eingesetzt werden. Geeignete UV-Absorber und Lichtstabilisatoren sind beispielsweise:
   2.1. 2-(2'-Hydroxyphenyl)benzotriazole, um Beispiel 2-(2'-Hydroxy-5'-methylphenyl)benzotriazol, 2-(3',5'-Di-tert-butyl-2'-hydroxyphenyl)benzotriazol, 2-(5'-tert-Butyl-2'-hydroxyphenylbenzotriazol, 2-(2'-Hydroxy-5'-(1,1,3,3-tetramethylbutyl) phenyl)benzo-triazol, 2-(3',5'-Di-tert-butyl-2'-hydroxyphenyl)-5-chlorbenzo-triazol, 2-(3'-tert-Butyl-2'-hydroxy-5'-methylphenyl)-5-chlorbenzotriazol, 2-(3'-sec-Butyl-5'-tert-butyl-2'-hydroxyphenyl)benzotriazol, 2-(2'-Hydroxy-4'-octyloxyphenyl)benzotriazol, 2-(3',5'-Di-tert-amyl-2'-hydroxyphenyl)benzotriazol, 2-(3',5'-Bis(α,α-dimethylbenzyl)-2'-hydroxyphenyl)benzotriazol, 2-(3'-tert-Butyl-2'-hydroxy-5'-(2-octyloxycarbonyl-ethyl)phenyl)-5-chlorbenzotriazol, 2-(3'-tert-Butyl-5'-[2-(2-ethyl-hexyloxy)carbonyl-ethyl]-2'-hydroxyphenyl)-5-chlorbenzotriazol, 2-(3'-tert-Butyl-2'-hydroxy-5'-(2-meth-oxycarbonylethyl)phenyl)-5-chlorbenzotriazol, 2-(3'-tert-Butyl-2'-hydroxy-5'-(2-methoxycarbonylethyl)phenyl)benzotriazol, 2-(3'-tert-Butyl-2'-hydroxy-5'-(2-octyl-oxycarbonylethyl)phenyl)benzotriazol, 2-(3'-tert-Butyl-5'-[2-(2-ethylhexyloxy)carbonylethyl]-2'-hydroxyphenyl)benzotriazol, 2-(3'-Dodecyl-2'-hydroxy-5'-methylphenyl)benzotriazol, 2-(3'-tert-Butyl-2'-hydroxy-5'-(2-isooctyl-oxycarbonylethyl)phenylbenzotriazol, 2,2'-Methylenbis[4-(1,1,3,3-tetramethylbutyl)-6-benzotriazol-2-ylphenol]; das Umesterungsprodukt von 2-[3'-tert-Butyl-5'-(2-methoxycarbonylethyl)-2'-hydroxyphenyl]-2H-benzotriazol mit Polyethylenglycol 300; [R―CH₂CH₂―COO―CH₂CH₂⁆₂, wobei R = 3'-tert-Butyl-4'-hydroxy-5'-2H-benzotriazol-2-ylphenyl; 2-[2'-Hydroxy-3'-(α,α-dimethylbenzyl)-5'-(1,1,3,3-tetramethylbutyl)phenyl]benzotriazol, 2-[2'-Hydroxy-3'-(1,1,3,3-tetramethylbutyl)-5'-(α,α-dimethylbenzyl)phenyl]benzotriazol.
   2.2. 2-Hydroxybenzophenone, zum Beispiel die 4-Hydroxy-, 4-Methoxy-, 4-Octyloxy-, 4-Decyloxy-, 4-Dodecyloxy-, 4-Benzyloxy-, 4,2',4'-Trihydroxy- und 2'-Hydroxy-4,4'-dimethoxy-Derivate.
2.3. Ester von substituierten und unsubstituierten Benzoesäuren, wie zum Beispiel 4-tert-Butylphenylsalicylat, Phenylsalicylat, Octylphenylsalicylat, Bibenzoylresorcin, Bis(4-tert-butylbenzoyl)resorcin, Benzoylresorcin, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-butyl-4-hydroxybenzoat.
2.4. Aciylate, zum Beispiel Ethyl-α-cyan-β,β-diphenylacrylat, Isooctyl-α-cyan-β,β-diphenylacrylat, Methyl-α-carbomethoxycinnamat, Methyl-α-cyan-β-methyl-p-methoxycinnamat, Butyl-α-cyan-β-methyl-p-methoxycinnamat, Methyl-α-carbomethoxy-p-methoxycinnamat und N-(β-Carbomethoxy-β-cyanvinyl)-2-methylindolin.
2.5. Nickelverbindungen, zum Beispiel Nickelkomplexe von 2,2'-Thiobis[4-(1,1,3,3-tetramethylbutyl)phenol], wie der 1:1- oder 1:2-Komplex, mit oder ohne zusätzliche Liganden, wie n-Butylamin, Triethanolamin oder N-Cyclohexyldiethanolamin, Nickeldibutyldithiocarbamat, Nickelsalze der Monoalkylester, z.B. des Methyl- oder Ethylesters, von 4-Hydroxy-3,5-di-tert-butylbenzylphosphonsäure, Nickelkomplexe von Ketoximen, z.B. von 2-Hydroxy-4-methylphenylundecylketoxim, Nickelkomplexe von 1-Phenyl-4-lauroyl-5-hydroxypyrazol, mit oder ohne zusätzliche Liganden.
2.6. Sterisch gehinderte Amine, zum Beispiel Bis(2,2,6,6-tetramethyl-4-piperidyl)sebacat, Bis(2,2,6,6-tetramethyl-4-piperidyl)succinat, Bis(1,2,2,6,6-pentamethyl-4-piperidyl)sebacat, Bis(1-octyloxy-2,2,6,6-tetramethyl-4-piperidyl)sebacat, Bis(1,2,2,6,6-pentamethyl-4-piperidyl), n-Butyl-3,5-di-tert-butyl-4-hydroxy-benzylmalonat, das Kondensat von 1-(2-Hydroxyethyl)-2,2,6,6-tetramethyl-4-hydroxypiperidin und Bernsteinsäure, lineare oder cyclische Kondensate von N,N'-Bis-(2,2,6,6-tetramethyl-4-piperidyl)hexamethylendiamin und 4-tert-Octylamino-2,6-dichlor-1,3,5-triazin, Tris(2,2,6,6-tetramethyl-4-piperidyl)nitrilotriacetat, Tetrakis(2,2,6,6-tetramethyl-4-piperidyl)-1,2,3,4-butantetracarboxylat, 1,1'-(1,2-Ethandiyl) bis(3,3,5,5-tetramethylpiperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)malonat, 3-n-Octyl-7,7,9,9-tetramethyl-1,3,8-triazaspiro[4.5]decan-2,4-dion, Bis(1-octyloxy-2,2,6,6-tetramethyl-piperidyl) sebacat, Bis(1-octyloxy-2,2,6,6-tetramethylpiperidyl)succinat, lineare oder cyclische Kondensate von N,N'-Bis(2,2,6,6-tetramethyl-4-piperidyl)hexamethylendiamin und 4-Morpholino-2,6-dichlor-1,3,5-triazin, das Kondensat von 2-Chlor-4,6-bis(4-n-butylamino-2,2,6,6-tetramethylpiperidyl)-1,3,5-triazin und 1,2-Bis(3-aminopropyl-amino)ethan, das Kondensat von 2-Chlor-4,6-bis(4-n-butylamino-1,2,2,6,6-penta-methylpiperidyl)-1,3,5-triazin und 1,2-Bis(3-aminopropylamino)ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, ein Gemisch von 4-Hexadecyloxy- und 4-Stearyloxy-2,2,6,6-tetramethylpiperidin, ein Kondensationsprodukt von N,N'-Bis(2,2,6,6-tetramethyl-4-piperidyl)hexamethylendiamin und 4-Cyclohexylamino-2,6-dichloro-1,3,5-triazin, ein Kondensationsprodukt von 1,2-Bis-(3-aminopropylamino)ethan und 2,4,6-Trichlor-1,3,5-triazin sowie 4-Butylamino-2,2,6,6-tetramethylpiperidin (CAS Reg. No. [136504-96-6]); N-(2,2,6,6-Tetramethyl-4-piperidyl)-n-dodecylsuccinimid, N-(1,2,2,6,6-Pentamethyl-4-piperidyl)-n-dodecyl-succinimid, 2-Undecyl-7,7,9,9-tetramethyl-1-oxa-3,8-diaza-4-oxospiro[4.5]decan, ein Reaktionsprodukt von 7,7,9,9-Tetramethyl-2-cycloundecyl-1-oxa-3,8-diaza-4-oxospiro[4.5]decan und Epichlorhydrin, 1,1-Bis(1,2,2,6,6-pentamethyl-4-piperidyl-oxycarbonyl)-2-(4-methoxyphenyl)ethen, N,N'-Bis(formyl)-N,N'-bis(2,2,6,6-tetra-methyl-4-piperidyl)hexamethylendiamin, Diester von 4-Methoxymethylenmalonsäure mit 1,2,2,6,6-Pentamethyl-4-hydroxypiperidin, Poly[methylpropyl-3-oxy-4-(2,2,6,6-tetramethyl-4-piperidyl)]siloxan, Reaktionsprodukt von Maleinsäureanhydrid-α-Olefin-Copolymer mit 2,2,6,6-Tetramethyl-4-aminopiperidin oder 1,2,2,6,6-Pentamethyl-4-aminopiperidin.
2.7. 0xamide, zum Beispiel 4,4'-Dioctyloxyoxanilid, 2,2'-Diethoxyoxanilid, 2,2'-Dioctyloxy-5,5'-di-tert-butoxanilid, 2,2'-Didodecyloxy-5,5'-di-tert-butoxanilid, 2-Ethoxy-2'-ethyloxanilid, N,N'-Bis(3-dimethylaminopropyl)oxamid, 2-Ethoxy-5-tert-butyl-2'-ethoxanilid und dessen Gemisch mit 2-Ethoxy-2'-ethyl-5,4'-di-tert-butoxanilid, Gemische von o- und p-Methoxy-disubstituierten Oxaniliden und Gemische von o- und p-Ethoxy-disubstituierten Oxaniliden.
2.8. 2-(2-Hydroxyphenyl)-1,3,5-triazine, zum Beispiel 2,4,6-Tris(2-hydroxy-4-octyloxyphenyl)-1,3,5-triazin, 2-(2-Hydroxy-4-octyloxyphenyl)-4,6-bis(2,4-dimethyl-phenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxy-phenyl)-4,6-diphenyl-1,3,5-triazin, 2,4,6-Tris[2-hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.

Es können einzelne dieser Verbindungen oder Gemische derselben eingesetzt werden.
3. Geeignete Metalldesaktivatoren sind zum Beispiel N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)oxalyldihydrazid, N,N'-Bis(salicyloyl)thiopropionyldihydrazid. Es können einzelne dieser Verbindungen oder Gemische derselben eingesetzt werden.
4. Geeignete Peroxidfänger sind zum Beispiel Ester von β-Thiodipropionsäure, zum Beispiel der Lauryl-, Stearyl-, Myristyl- oder Tridecylester, Mercaptobenzimidazol oder das Zinksalz von 2-Mercaptobenzimidazol, Zinkdibutyldithiocarbamat, Dioctadecyldisulfid, Pentaerythrittetrakis(dodecylmercapto)propionat. Es können einzelne dieser Verbindungen oder Gemische derselben eingesetzt werden.
5. Geeignete basische Costabilisatoren sind zum Beispiel Melamin, Polyvinylpyrrolidon, Dicyandiamid, Triallylcyanurat, Harnstoffderivate, Hydrazinderivate, Amine, Polyamide, Polyurethane, Alkalimetallsalze und Erdalkalimetallsalze höherer Fettsäuren, zum Beispiel Calciumstearat, Zinkstearat, Magnesiumbehenat, Magnesiumstearat, Natriumricinoleat und Kaliumpalmitat, Antimonpyrocatecholat oder Zinkpyrocatecholat. Es können einzelne dieser Verbindungen oder Gemische derselben eingesetzt werden.
6. Geeignete Keimbildner sind zum Beispiel anorganische Substanzen, wie Talk, Metalloxide, wie Titandioxid oder Magnesiumoxid, Phosphate, Carbonate oder Sulfate, vorzugsweise von Erdalkalimetallen; organische Verbindungen, wie Mono- oder Polycarbonsäuren und deren Salze, z.B. 4-tert-Butylbenzoesäure, Adipinsäure, Diphenylessigsäure, Natriumsuccinat oder Natriumbenzoat; polymere Verbindungen, wie ionische Copolymere (Ionomere). Besonders bevorzugt sind 1,3:2,4-Bis(3',4'-dimethylbenzyliden)sorbit, 1,3:2,4-Di(paramethyldibenzyliden)sorbit und 1,3:2,4-Di-(benzyliden)sorbit. Es können einzelne dieser Verbindungen oder Gemische derselben eingesetzt werden.
7. Geeignete Füllstoffe und Verstärkungsmittel sind zum Beispiel Calciumcarbonat, Silicate, Glasfasern, Glasballons, Asbest, Talk, Kaolin, Glimmer, Bariumsulfat, Metalloxide und -hydroxide, Ruß, Graphit, Wollastonit, Holzmehl und Mehle oder Fasern anderer Naturprodukte, synthetische Fasern. Es können einzelne dieser Verbindungen oder Gemische derselben eingesetzt werden.
8. Geeignete andere Additive sind zum Beispiel Weichmacher, Gleitmittel, Emulgatoren, Pigmente, Viskositätsmodifikatoren, Katalysatoren, Verlaufmittel, optische Aufheller, Flammschutzmittel, antistatische Mittel und Treibmittel.
9. Geeignete Benzofuranone und Indolinone sind zum Beispiel diejenigen, die in U.S. 4,325,863; U.S. 4,338,244; U.S. 5,175,312; U.S. 5,216,052; U.S. 5,252,643; DE-A-4 316 611; DE-A-4 316 622; DE-A-4 316 876; EP-A-0 589 839 oder EP-A-0 591 102 offenbart sind, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]benzofuran-2-on, 3,3'-Bis[5,7-di-tert-butyl-3-(4-[2-hydroxyethoxy]phenyl)benzofuran-2-on], 5,7-Di-tert-butyl-3-(4-ethoxyphenyl)benzofuran-2-on, 3-(4-Acetoxy-3,5-dimethylphenyl)-5,7-di-tert-butylbenzofuran-2-on, 3-(3,5-Dimethyl-4-pivaloyloxyphenyl)-5,7-di-tert-butylbenzo-furan-2-on, 3-(3,4-Dimethylphenyl)-5,7-di-tert-butylbenzofuran-2-on, 3-(2,3-Dimethylphenyl)-5,7-di-tert-butylbenzofuran-2-on, Lacton-Antioxidantien wie 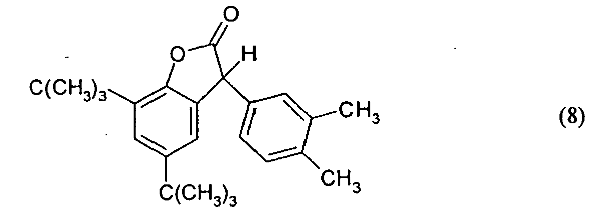 Diese Verbindungen wirken beispielsweise als Antioxidantien. Es können einzelne dieser Verbindungen oder Gemische derselben eingesetzt werden.
10. Geeignete fluoreszierende Weichmacher sind die in "Plastics Additives Handbook", Hrsg. R. Gächter und H. Müller, Hanser Verlag, 3. Aufl., 1990, Seite 775-789 aufgeführten.
11. Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie Salze, wie C₄F₉SO₃⁻Na⁺.
12. Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.
13. Geeignete Polymere sind SAN, ABS, PMMA, PTFE, PSU, PPS, Polyolefine, wie Polyethylen, Polypropylen und Ethylen-Propylen-Kautschuke, Epoxyharze, Polyester, wie PBT, PET, PCT, PCTG und PETG sowie andere im Grenzflächenverfahren erzeugte Polycarbonate.
14. Geeignete antistatische Mittel sind Sulfonatsalze beispielsweise Tetraethylammoniumsalze von C₁₂H₂₅SO³⁻ oder C₈F₁₇SO³⁻.
15. Geeignete Färbemittel sind Pigmente sowie organische und anorganische Farbstoffe.
16. Verbindungen, die Epoxygruppen enthalten, wie 3,4-Epoxycyclohexylmethyl-3,4-epoxycyclohexylcarboxylat, Copolymere von Glycidylmethacrylat und Epoxysilane.
17. Verbindungen, die Anhydridgruppen, wie Maleinsäureanhydrid, Bernsteinsäureanhydrid, Benzoesäureanhydrid und Phthalsäureanhydrid.
18. Als Stabilisatoren geeignete Phosphite und Phosphonites sind zum Beispiel Triphenylphosphit, Diphenylalkylphosphite, Phenyldialkylphosphite, Tris(nonylphenyl)phosphit, Trilaurylphosphit, Trioctadecylphosphit, Distearylpentaerythritdiphosphit, Tris(2,4-di-tert-butylphenyl)phosphit, Diisodecylpentaerythritdiphosphit, Bis(2,4-di-tert-butylphenyl)pentaerythritdiphosphit, Bis(2,6-di-tert-butyl-4-methylphenyl)pentaery-thritdiphosphit, Diisodecyloxypentaewthritdiphosphit, Bis(2,4-di-tert-butyl-6-methylphenyl)pentaerythritdiphosphit, Bis(2,4,6-tris(tert-butylphenyl)pentaerythritdiphosphit, Tristearylsorbittriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluor-2,4,8,10-tetra-tert-butyl-12-methyldibenz[d,g]-1,3,2-dioxaphosphocin, 2,2',2"-Nitrilo-[triethyltris(3,3',5,5'tetra-tert-butyl-1,1'-biphenyl-2,2'-diyl)phosphit], 2-Ethyl-hexyl(3,3',5,5'-tetratert-butyl-1,1'-biphenyl-2,2'-diyl)phosphit, 5-Butyl-5-ethyl-2-(2,4,6-tri-tert-butylphenoxy)-1,3,2-dioxaphosphiran. Es können einzelne dieser Verbindungen oder Gemische derselben eingesetzt werden.

Besonders bevorzugt sind Tris(2,4-di-tert-butylphenyl)phosphit (Irgafos® 168, Ciba-Geigy), oder Triphenylphosphin.

Die Verbindungen der Gruppen 16 und 17 wirken als Schmelzestabilisatoren. Sie können einzeln oder in Gemischen eingesetzt werden.

Als Entformungsmittel werden vorzugsweise Ester ein- oder mehrwertiger Alkohole mit langkettigen Carbonsäuren verwandt wie Loxiol G32 oder Loxiol G33. Bevorzugt sind auch solche Entformungsmittel, die nicht vollständig verestert wurden, demnach freie OH-Gruppen aufweisen. Besonders bevorzugt sind (Teil-)Ester von gesättigten einwertigen Fettsäuren mit 16 bis 22 Kohlenstoffatomen mit Glycerin, Trimethylolpropan, Pentaerythrit oder ähnlichen mehrwertigen Alkoholen. Insbesondere Glycerinmonostearat (GMS) und Glycerinmonopalmiat. Weiterhin bevorzugt ist Pentaerythrittetrastearat (PETS),

Solche gesättigten einwertigen Fettsäureester des Glycerins werden alleine oder als Mischungen mit zwei oder mehr Komponenten eingesetzt. Die gesättigten Monoester des Glycerins werden üblicherweise über die Umesterung von hydriertem tierischem oder pflanzlichem Öl mit Glycerin hergestellt. Obwohl das Reaktionsprodukt auch andere Ester als die Glycerinester enthalten kann, wird es als Entformungsmittel eingesetzt. Beispielsweise kann die Mischung kleine oder größere Anteile von Diglyceriden und Triglyceriden enthalten.

Das Optimum der Entformungsmittelmenge bei der Herstellung von CD's und anderen optischen Speichermedien (DVD's etc.) ist einerseits durch eine ausreichende entformende Wirkung, andererseits durch Belagsbildung auf dem Werkzeug bestimmt. Üblicherweise eingesetzte Konzentrationen liegen zwischen 50 bis 1000 ppm, vorteilhafter zwischen 100 und 500 ppm an Entformungsmittel. Für die übrigen Anwendungen von Polycarbonat liegen die Konzentrationen bei 100-10000 ppm, bevorzugt bei 2000-7000 ppm.

Als Thermostabilisatoren werden beispielsweise, aber nicht beschränkend, spezielle Phosphite verwendet, welche sowohl aromatische wie aliphatische Reste in einem Molekül besitzen. Es sind Verbindungen der folgenden Struktur: 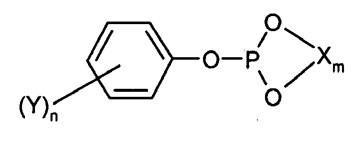 worin
- n: die Zahl 0-5, bevorzugt 1-3 darstellt und ganz besonders bevorzugt 3 darstellt,
- Y: jeweils unabhängig voneinander Alkyl oder gegebenenfalls substituiertes Aryl, bevorzugt C₁-C₄-Alkyl, besonders bevorzugt Methyl, sec.Butyl und tert.-Butyl bedeutet,
- m: die Zahl 1-3, bevorzugt 3 darstellt und
- X: jeweils voneinander unabhängig für einen gegebenenfalls substituierten Methylenrest steht, wobei mindestens ein Methylenrest vollständig substituiert sein muß und die Substituenten unabhängig voneinander aus der Gruppe C1-C20-Alkyl ausgewählt sind oder aber die zwei Substituenten an einem vollständig substituierten Methylenrest gemeinsam für einen Rest 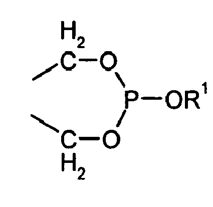
stehen,
in welchem R¹ aus der Gruppe C₁-C₁₈-Alkyl, C₃-C₁₂-Cycloalkyl, C₆-C₃₀-Alkaryl und Aryl, wobei diese Reste wiederum durch 1-4 O-Alkylen-O und /oder Carbonsäureester-COO-reste substituiert sein können; C₂-C₁₈-polyhydroxyalkyl mit 2 bis 10 Hydroxylgruppen; C₂-C₁₈-Polyphenylreste mit 2 bis zehn phenolischen OH-Gruppen, ausgewählt sind.

Bevorzugt sind dabei Verbindungen der Formel 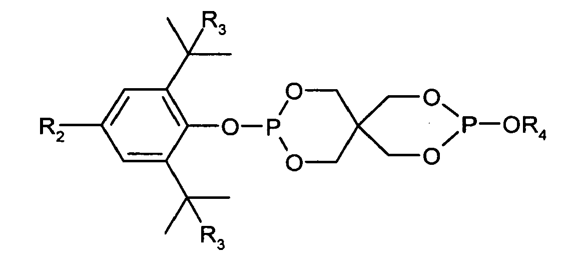 in welcher
- R²: für C₁-C₆-Alkyl;
- R³: für Methyl oder Ethyl und
- R⁴: aus der Gruppe C₁-C₁₈-Alkyl, C₃-C₁₂-Cycloalkyl, C₆-C₃₀-Alkaryl und Aryl, wobei diese Reste wiederum durch 1-4 O-Alkylen-O und /oder Carbonsäureester-COO-reste substituiert sein können; C₂-C₁₈-Polyhydroxyalkyl mit 2 bis 10 Hydroxylgruppen; C₂-C₁₈₋Polyphenylreste mit 2 bis zehn phenolischen OH-Gruppen, ausgewählt ist.

Ebenfalls bevorzugt sind Verbindungen der Formel 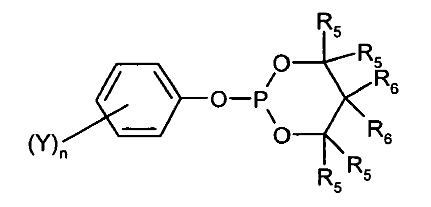 Worin Y und n die oben genannten Bedeutungen haben und
R5 unabhängig voneinander aus der Gruppe Wasserstoff und C₃-C₂₀-Alkyl ausgewählt wird, bevorzugt steht dabei mind. ein R⁵ für Alkyl,
R⁶ unabhängig voneinander für C₁-C₁₀-Alkyl stehen.

Besonders bevorzugt sind Verbindungen der Formel 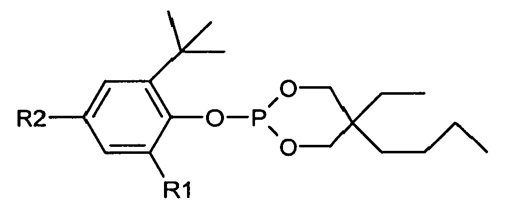 wobei R¹ und R² für Methyl, sec-Butyl oder tert-Butyl stehen.

Ebenfalls besonders bevorzugt sind außerdem die in EP A1 0 038 876 auf S. 16-20 definierten Verbindungen sowie das in der gleichen Schrift auf Seite 21 genannte Beispiel.

Ganz besonders bevorzugt ist (2,4,6-Tri-t-butylphenyl)-(2-butyl-2-ethyl-propan-1,3-diyl)-phosphit, welches folgende Struktur aufweist:

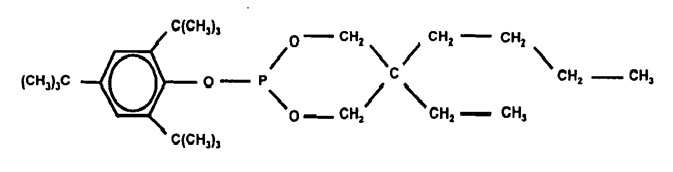

Die Phosphite können allein, jedoch auch in Kombination mit anderen Phosphorverbindungen eingesetzt werden, wobei die anderen Phosphorverbindungen auch solche sein können, die eine andere Oxidationszahl des Phosphors besitzen. Demnach können z.B. Kombinationen der erfindungsgemäßen Phosphite mit anderen Phosphiten, mit Phosphinen, z.B. Triphenylphosphin, mit Phosphoniten, mit Phosphaten, mit Phosphonaten usw. eingesetzt werden.

Die eingesetzten Phosphite sind generell bekannt oder analog bekannter Phosphite herstellbar, (2,4,6-Tri-t-butylphenyl)-(2-butyl-2-ethyl-propan-1,3-diyl)-phosphit ist z.B. beschrieben in der EP-A 702018 und EP 635514.

Die erfindungsgemäßen Polymermischungen enthalten die Phosphorverbindung im allgemeinen zu einem Anteil von 10-5000 ppm, bevorzugt 10 - 1000 ppm, besonders bevorzugt 20 - 500 ppm, ganz besonders bevorzugt zwischen 50 und 250 ppm.

Der Zusatz der Entformungsmittel, der Phosphorverbindung und der erfindungsgemäßen Formale zu den thermoplastischen Formmassen erfolgt beispielhaft und vorzugsweise, indem man sie nach der Herstellung und während der Aufarbeitung der Polycarbonate, z.B. durch Zugabe zu der Polycarbonat-Polymerlösung, oder einer Schmelze der thermoplastischen Formmassen zudosiert. Weiterhin ist es auch möglich, die Komponenten unabhängig voneinander in verschiedenen Arbeitsschritten zuzudosieren, z.B. eine der Komponenten während der Aufarbeitung der Polymerlösung und die andere(n) Komponte(n) in der Schmelze, solange gewährleistet ist, dass alle Komponenten bei der Herstellung der Endprodukte (Formkörper) enthalten sind.

Der Fachmann wird für Anwendungen im Bereich der CD, DVD und anderer optischer Aufzeichnungsmedien aus den oben genannten Additiven selbstverständlich geeignete, die Transparenz nicht beeinträchtigende Additive auswählen.

Ganz besonders geeignete Additive sind IRGANOX 1076 ®, s.o. und Benzotriazole der Gruppe 2.1 (sog. Tinuvine), insbesondere in Mischung miteinander sowie Triphenylphosphin (TPP).

Die erfindungsgemäßen Formmassen werden in der für Polycarbonate bekannten Weise zur Herstellung von Formkörpern, vorzugsweise optischen Medien, verwandt. Insbesondere zur Herstellung von Compact Discs und DVD's sowie einmal- oder mehrfach beschreibbaren bzw. löschbaren optischen Medien. Die beschreibbaren Schichten bestehen dabei insbesondere aus Farbstoffen oder metallischen Schichten, wobei letztere als Aufzeichnungsprinzip den Wechsel vom amorphen in den kristallinen Zustand benutzen oder magnetische Eigenschaften besitzen.

Diese Herstellung der optischen Medien erfolgt vorzugsweise aus den fertig hergestellten, erfindungsgemäßen Formmassen, die beispielsweise als Granulat anfallen. Die Herstellung der optischen Medien kann aber auch durch Einarbeitung der Komponenten zu reinen oder handelsüblichen Polycarbonaten und/oder zu den bei der Herstellung von Formkörpern aus Polycarbonaten üblichen Zusätzen erfolgen.

Ein weiterer Gegenstand der Erfindung sind demnach Formkörper, wie insbesondere optische Datenträger, bevorzugt Compact Discs und DVD's die aus den erfindungsgemäßen thermoplastischen Formmassen erhältlich sind.

Die erfindungsgemäßen thermoplastischen Formmassen haben den Vorteil, dass sie eine geringere Wasseraufnahme und damit eine verbesserte Dimensionsstabilität aufweisen. Außerdem zeichnen sie sich durch ein verbessertes Fließverhalten aus, da sie eine geringere Schmelzviskosität aufweisen.

Die nachfolgende Beispiele dienen zur Erläuterung der Erfindung. Die Erfindung ist nicht auf die Beispiele beschränkt.

### Beispiele:

### Beispiel A:

### Synthese des Copolyformals aus Bisphenol TMC und Bisphenol A

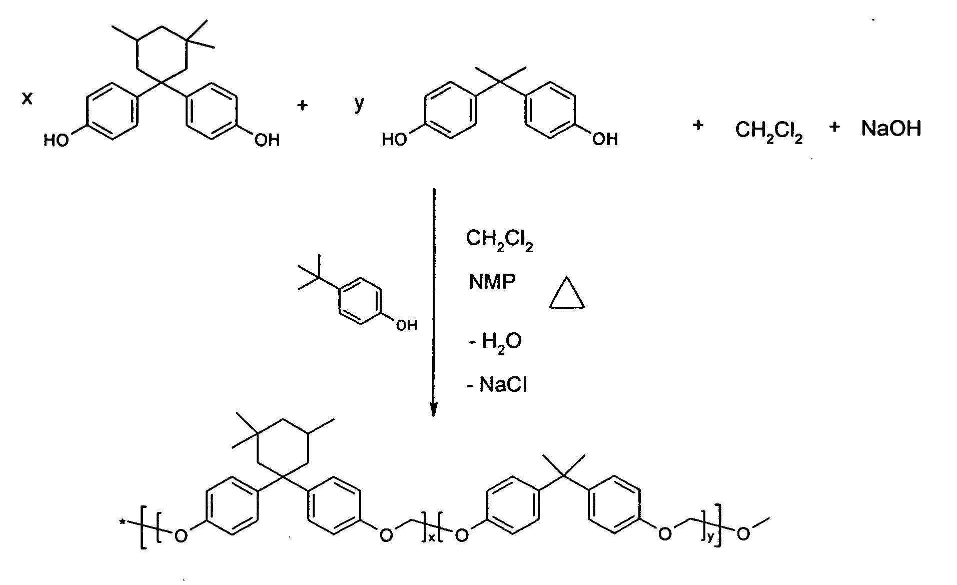

5,432 kg (17,5 mol) Bisphenol TMC (x=70 mol-%), 1,712 kg (7,5 mol) Bisphenol A (y=30 mol-%), 2,5 kg (62,5 mol) Natriumhydroxid-Plätzchen und 56,33 g (0,375 mol) fein gemörsertes p-tert-Butylphenol (Aldrich) in 500 ml Methylenchlorid werden zu einem Lösungsmittelgemisch aus 28,7 kg Methylenchlorid und 40,18 kg N-Methyl-2-pyrrolidon (NMP) unter Rühren und Stickstoffschutzgas hinzugegeben. Nach Homogenisierung wird auf Rückfluss (78°C) aufgeheizt und eine Stunde lang bei dieser Temperatur gerührt. Nach dem Abkühlen bis auf 25°C wird der Reaktionsansatz mit 35 1 Methylenchlorid und 20 l entmineralisiertem Wasser verdünnt. In einem Separator wird der Ansatz mit Wasser neutral und salzfrei (Leitfähigkeit < 15 µS.cm⁻¹) gewaschen. Die organische Phase aus dem Separator wird abgetrennt und in einem Eindampfkessel der Lösungsmittelaustausch Methylenchlorid gegen Chlorbenzol vorgenommen. Anschließend erfolgt die Extrusion des Materials über einen Ausdampfextruder ZSK 32 bei einer Temperatur von 280°C mit abschließender Granulierung. Dabei erhält man nach dem Verwerfen von Vorlaufmaterial insgesamt 5,14 kg Copolyformal als transparentes Granulat. Dieses enthält noch niedermolekulare Ringe als Verunreinigung. Das Material wird mit ca. 5 l Aceton über Nacht angequollen. Die erhaltenen Masse wird mit mehreren Portionen frischem Aceton solange geknetet, bis keine Ringe mit der Maldi-Tof-Methode mehr nachgewiesen werden können. Das aufgereinigte Material wird in Chlorbenzol aufgelöst und nochmals bei 270°C über den Ausdampfextruder extrudiert. Dabei erhält man nach dem Verwerfen von Vorlaufmaterial 3,11 kg Polyformal als transparentes Granulat.

### Analytik:

- Molekulargewicht Mw = 39901, Mn = 19538, D = 2,04 nach GPC (Eichung gegen Polycarbonat).
- Glastemperatur Tg = 148 °C
- Relative Lösungsviskosität in Methylenchlorid (0,5 g/100 ml Lösung) = 1,246
- ¹H-NMR in CDCl₃ zeigt das erwartet Einbauverhältnis x/y

### Beispiel B:

### Compounds aus Polycarbonat und Polyformal

Die in Tabelle 1 aufgeführten Compounds werden wie folgt hergestellt:

Das Polycarbonat (CD2005, BPA-Polycarbont von Bayer MaterialScience AG, MVR 60 ml/10 min) und das Polyformal aus Beispiel A werden mit den in Tabelle 1 angegebenen Mengen eingewogen und in ca. 100 ml Methylenchlorid gelöst. Anschließen wird die so erhaltene homogene Lösung über Nacht im Vakuum-Trockenschrank zu bei 80°C zur Trockne eingedampft und der Rückstand gemahlen. Die Feststoffe werden in einer DSM-Minispritzgussmschine bei einer Temperatur von 250°C und einer Verweilzeit von 3 Minuten compoundiert.

Von den erhaltenen Produkten wird die Wasseraufnahme nach Lagerung im Feuchteklima bei 95 % relativer Feuchte und 30°C Lagertemperatur bestimmt. Die nach 7 und 14 Tagen Lagerung erhaltenen Werte sind in Tabelle 1 wiedergegeben.

**Tabelle 1**

| Bsp. | Polycarbonat | Polyformal A | Wasseraufnahme (%) | |
|---|---|---|---|---|
| | (Einwage in g) | (Einwaage in g) (bzw. %) | 7 Tage | 14 Tage |
| 1 | 15,0 | -- | 0,32 | 0,33 |
| 2 | 14,25 | 0,75 (5 %) | 0,26 | 0,29 |
| 3 | 13,50 | 1,50 (10 %) | 0,22 | 0,27 |
| 4 | 11,25 | 3,75 (25 %) | 0,21 | 0,23 |

Man erkennt, dass die erfindungsgemäßen Compounds der Beispiele 2-4 eine deutlich niedrigere Wasseraufnahme haben, als das reine Polycarbonat gemäß Vergleichsbeispiel1.

## Patentansprüche

1. Zusammensetzung enthaltend mindestens ein Polycarbonat und mindestens ein Polyformal basierend auf der wiederkehrenden Monomereinheit der Formel (1) 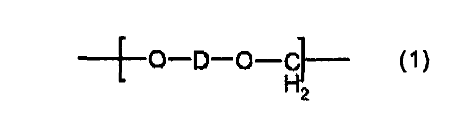 worin
D unabhängig voneinander für einen aromatischen Rest mit 6 bis 40 Kohlenstoffatomen steht, der einen oder mehrere aromatische oder kondensierte, gegebenenfalls Heteroatome enthaltende aromatische Kerne enthalten kann und gegebenenfalls mit C₁-C₁₂-Alkyl und/oder Halogen substituiert ist, und wobei der aromatische Kern weiterhin aliphatische oder cycloaliphatische Reste, aromatische Kerne oder Heteroatome als Brückenglieder enthalten kann,
wobei Polyformal in einer Menge von 2 - 30 Gew.-% bezogen auf die Zusammensetzung aus Polycarbonat und Polyformal enthalten ist.

2. Zusammensetzung gemäß Anspruch 1, worin D für einen Rest der Formel (1 a) steht 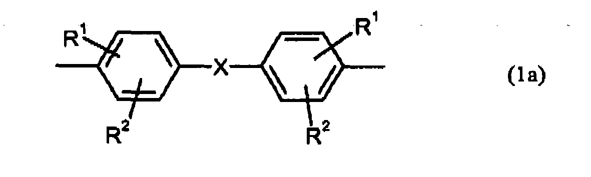 in der
R¹ und R² unabhängig voneinander für H, C₁-C₁₈-Alkyl-, C₁-C₁₈-Alkoxy, Halogen oder für jeweils gegebenenfalls substituiertes Aryl- oder Aralkyl und
X für eine Einfachbindung, -SO₂-, -CO-, -O-, -S-, C₁- bis C₆-Alkylen, C₂- bis C₅-Alkyliden oder C₅- bis C₆- Cycloalkyliden, welches mit C₁- bis C₆-Alkyl substituiert sein kann, ferner für C₆- bis C₁₂-Arylen, welches gegebenenfalls mit weiteren Heteroatome enthaltenden aromatischen Ringen kondensiert sein kann, steht.

3. Zusammensetzung gemäß Anspruch 2, worin sich D ableitet von mindestens einer Verbindung ausgewählt aus 2,2-Bis-(4-hydroxyphenyl)-propan, 4,4'-Dihyclroxybiphenyl, 1,3-Bis[2-(4-hydroxyphenyl)-2-propyl]-benzol und 1,1-Bis-(4-hydroxyphenyl)-3,3,5-trimethylcyclohexan.

4. Zusammensetzung nach Anspruch 1, enthaltend als Entformungsmittel Ester mehrwertiger Alkohole mit langkettigen Carbonsäuren sind, wobei die Ester mindestens noch eine freie OH-Gruppe enthalten.

5. Zusammensetzung gemäß der vorangehenden Ansprüchen, wobei das Polycarbonat ein Molekulargewicht von 15000 bis 35000 aufweist.

6. Zusammensetzung gemäß der vorangehenden Ansprüchen, enthaltend Polyformal in einer Menge zwischen 5 und 30 Gew.-% bezogen auf die Zusammensetzung aus Polycarbonat und Polyformal.

7. Zusammensetzung gemäß der vorangehenden Ansprüchen, enthaltend 0,01 bis 1,5 Gew-% Entformungsmittel.

8. Verwendung der Zusammensetzungen gemäß der vorangehenden Ansprüche zur Herstellung von Formkörpern.

9. Formkörper erhältlich aus Zusammensetzungen gemäß der Ansprüche 1 bis 7.

10. Optische Datenträger erhältlich aus Zusammensetzungen der Ansprüche 1 bis 7.

## Claims

1. Composition comprising at least one polycarbonate and at least one polyformal based on the repeating monomer unit of formula (1) 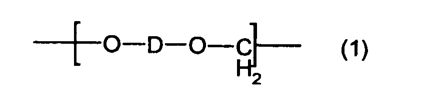 wherein
each D independently of the other represents an aromatic radical having from 6 to 40 carbon atoms which may contain one or more aromatic or fused aromatic nuclei optionally containing hetero atoms and which is optionally substituted by C₁-C₁₂-alkyl and/or by halogen, and wherein the aromatic nucleus may further contain aliphatic or cycloaliphatic radicals, aromatic nuclei or hetero atoms as bridge members,
wherein polyformal is present in an amount of from 2 to 30 wt.%, based on the composition comprising polycarbonate and polyformal.

2. Composition according to claim 1, wherein D represents a radical of formula (1a) 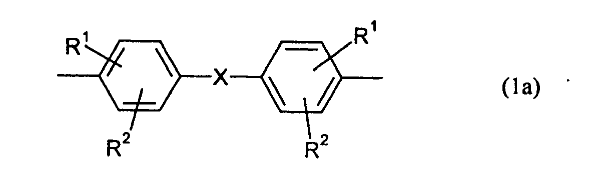 wherein
R¹ and R² independently of one another represent H, C₁-C₁₈-alkyl, C₁-C₁₈-alkoxy, halogen, or in each case optionally substituted aryl or aralkyl, and
X represents a single bond, -SO₂- -CO-, -O-, -S-, C₁- to C₆-alkylene, C₂- to C₅-alkylidene or C₅- to C₆-cycloalkylidene, which may be substituted by C₁- to C₆-alkyl, or X represents C₆- to C₁₂-arylene which may optionally be fused with further aromatic rings containing hetero atoms.

3. Composition according to claim 2, wherein D is derived from at least one compound selected from 2,2-bis-(4-hydroxyphenyl)-propane, 4,4'-dihydroxybiphenyl, 1,3-bis[2-(4-hydroxyphenyl)-2-propyl]-benzene and 1,1-bis-(4-hydroxyphenyl)-3,3,5-trimethylcyclohexane.

4. Composition according to claim 1 containing as mould release agent esters of polyhydric alcohols with long-chain carboxylic acids, the esters containing at least one free OH group.

5. Composition according to the preceding claims, wherein the polycarbonate has a molecular weight of from 15,000 to 35,000.

6. Composition according to the preceding claims containing polyformal in an amount of from 5 to 30 wt.%, based on the composition comprising polycarbonate and polyformal.

7. Composition according to the preceding claims containing from 0.01 to 1.5 wt.% mould release agent.

8. Use of the compositions according to the preceding claims in the production of moulded bodies.

9. Moulded bodies obtainable from compositions according to claims 1 to 7.

10. Optical data carriers obtainable from compositions of claims 1 to 7.

## Revendications

1. Composition contenant au moins un polycarbonate et au moins un polyformal à base de l'unité monomère répétitive de la formule (1) 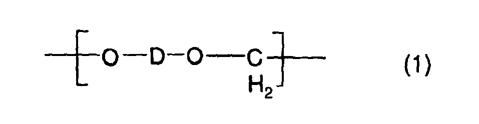 dans laquelle
D représente indépendamment un reste aromatique avec de 6 à 40 atomes de carbone, lequel peut contenir un ou plusieurs noyaux aromatiques ou condensés, aromatiques contenant éventuellement des hétéroatomes et lequel est éventuellement substitué avec un groupe alkyle en C₁-C₁₂et/ou un atome d'halogène, et le noyau aromatique pouvant de plus contenir des restes aliphatiques ou cycloaliphatiques, des noyaux aromatiques ou des hétéroatomes comme éléments de pontage,
le polyformal étant contenu dans une quantité de 2-30 % en poids, rapporté à la composition de polycarbonate et de polyformal.

2. Composition selon la revendication 1, dans laquelle D représente un reste de la formule (1a) 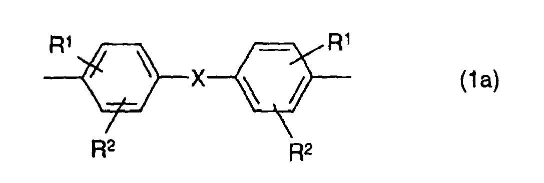 dans laquelle
R¹ et R² représentent indépendamment H, un groupe alkyle en C₁-C₁₈, alcoxy en C₁-C₁₈, un atome d'halogène ou un groupe alkyle ou aralkyle chacun éventuellement substitué et
X représente une liaison simple, -SO₂-, -CO-, -O-, -S-, un groupe alkylène en C₁-C₆, un groupe alkylidène en C₂-C₅ ou un groupe cycloalkylidène en C₅-C₆, lequel peut être substitué avec un groupe alkyle en C₁-C₆, de plus un groupe arylène en C₆-C₁₂, lequel peut être éventuellement condensé avec d'autres cycles aromatiques contenant des hétéroatomes.

3. Composition selon la revendication 2, dans laquelle D est dérivé d'au moins un composé choisi parmi le 2,2-bis-(4-hydroxyphényl)-propane, le 4,4'-dihydroxybiphényle, le 1,3-bis[2-(4-hydroxyphényl)-2-propyl]-benzène et le 1,1-bis-(4-hydroxyphényl)-3,3,5-triméthylcyclohexane.

4. Composition selon la revendication 1 contenant comme agent de démoulage des esters d'alcools polyvalents avec des acides carboxyliques à chaîne longue, dans laquelle les esters contiennent au moins encore un groupe OH libre.

5. Composition selon les revendications précédentes, dans laquelle le polycarbonate présente un poids moléculaire de 15 000 à 35 000.

6. Composition selon les revendications précédentes, contenant du polyformal dans une quantité comprise entre 5 et 30 % en poids rapporté à la composition de polycarbonate et de polyformal.

7. Composition selon les revendications précédentes contenant de 0,01 à 1,5 % en poids d'agent de démoulage.

8. Utilisation des compositions selon les revendications précédentes pour la préparation de corps moulés.

9. Corps moulés pouvant être obtenus à partir de compositions selon les revendications 1 à 7.

10. Support de données optique pouvant être obtenu à partir des compositions des revendications 1 à 7.
